# FASCICULE DE BREVET EUROPEEN

(11) **EP 0 846 603 B1**
(45) Date de publication et mention de la délivrance du brevet: **27.06.2001**
(21) Numéro de dépôt: 97121208.9
(22) Date de dépôt: 03.12.1997
(51) Int. Cl.: B60R 25/02

(54) **Actionneur, notamment pour un antivol électrique de véhicule automobile**
Antrieb, insbesondere für eine elektrische Fahrzeugdiebstahlsicherung
Actuator, in particular for a vehicle anti-theft device

(30) Priorité: 05.12.1996 FR 9615064
(43) Date de publication de la demande: 10.06.1998
(73) Titulaire: VALEO SECURITE HABITACLE, 94000 Créteil (FR)
(72) Inventeur: Garnault, Joel, 95110 Sannois (FR)
(74) Mandataire: Lenne, Laurence

(56) Documents cités:
- US-A- 3 659 377
- PATENT ABSTRACTS OF JAPAN vol. 017, no. 417 (M-1457), 4 août 1993 & JP 05 086761 A (HARADA IND CO LTD), 6 avril 1993,
- PATENT ABSTRACTS OF JAPAN vol. 016, no. 395 (M-1299), 21 août 1992 & JP 04 131557 A (ASMO CO LTD), 6 mai 1992,

## Description

L'invention concerne un actionneur, notamment pour un antivol électrique de véhicule automobile.

L'invention concerne plus particulièrement un actionneur dans lequel un mouvement d'entrée, qui peut être fourni par exemple par un moteur électrique ou par un câble, est transformé en deux mouvements successifs d'un arbre de sortie : une translation de l'arbre suivant une direction perpendiculaire à son axe et une rotation de l'arbre autour de son axe.

Lorsqu'un mécanisme nécessite, pour son fonctionnement, deux mouvements différents, il est généralement nécessaire d'utiliser deux sources de mouvement, c'est-à-dire deux actionneurs qui sont commandés chacun pour fournir l'un des deux mouvements.

Outre qu'il est alors nécessaire de disposer de deux actionneurs, ce qui est pénalisant en termes de coût, de poids et d'encombrement, il faut par ailleurs assurer une commande séparée de chacun de ces actionneurs, la commande des deux actionneurs n'étant par ailleurs pas forcément indépendante.

En effet, il est souvent nécessaire que l'un des deux mouvements fournis au mécanisme précède l'autre, le second mouvement ne pouvant intervenir qu'après que le premier a cessé.

Cela est notamment le cas dans certains types d'antivol pour une colonne de direction d'un véhicule automobile.

Le "Patent Abstracts of Japan" vol, 017, n° 417 (M-1457), 4 août 1993 (JP 05 086 761 A) décrit un actionneur à roue selon le préambule de la revendication 1.

L'invention a donc pour objet de proposer un actionneur permettant de transformer un unique mouvement d'entrée en deux mouvements successifs et de natures différentes d'un arbre de sortie de l'actionneur pour commander un mécanisme.

Dans ce but l'invention propose un actionneur du type à roue et vis sans fin précité, caractérisé en ce que la roue comporte un patin de commande qui est fixe par rapport à la roue et qui se déplace dans ladite lumière de commande, en ce que la lumière comporte un premier tronçon rectiligne, dans lequel le patin de commande de la roue coulisse en autorisant une translation de la roue selon une direction parallèle à l'axe de la vis et dans lequel le patin bloque toute rotation de la roue autour de son axe, et qui est prolongé par un second tronçon dans lequel le patin pivote pour autoriser la rotation de la roue autour de son axe tout en l'immobilisant en translation, et en ce que l'arbre de sortie est agencé selon l'axe de la roue et est solidaire en rotation de la roue.

Selon d'autres caractéristiques de l'invention :
- le second tronçon de la lumière de commande comporte un bord en arc de cercle d'axe parallèle à celui de la roue et dont le diamètre est sensiblement égal à la plus grande dimension du patin de commande dans un plan perpendiculaire à l'axe de la roue ;
- le second tronçon de la lumière de commande comporte une butée d'arrêt en rotation du patin qui limite la course angulaire du patin et de la roue quand celle-ci est sollicitée par la vis dans le sens dans lequel le patin parcourt la lumière de commande du premier vers le second tronçon, de manière à former un butée de fin de course angulaire de l'arbre de sortie ;
- le second tronçon de la lumière de commande comporte une butée d'arrêt en rotation du patin qui limite la course angulaire du patin et de la roue lorsque celle-ci est sollicitée par la vis dans le sens dans lequel le patin parcourt la lumière de commande du second tronçon vers le premier, de manière à déterminer une position angulaire du patin, à l'intérieur du second tronçon, à partir de laquelle il est ensuite susceptible de pénétrer dans le premier tronçon ;
- la course angulaire de l'arbre de sortie qui est délimitée par les butées d'arrêt est sensiblement égale à un quart de tour ;
- la vis sans fin est entraînée en rotation autour de son axe par un moteur électrique ;
- la vis sans fin est entraînée en rotation par l'intermédiaire d'un câble ;
- la roue est montée à rotation dans un palier de guidage qui coulisse dans une lumière de guidage du corps fixe de l'actionneur, et la lumière de guidage s'étend selon une direction parallèle à celle du premier tronçon de la lumière de commande ;
- la roue et la vis sans fin sont agencées à l'intérieur d'un boîtier qui comporte deux parois latérales parallèles à la direction de l'axe de la vis, l'arbre de sortie, qui est solidaire de la roue en rotation autour de leur axe commun, porte, d'un côté de la roue, le patin de commande qui est solidaire en rotation de l'arbre et qui est reçu dans la lumière de commande formée dans une des parois latérales, et, de l'autre côté de la roue, le palier de guidage qui est libre en rotation sur l'arbre de sortie et qui est reçu dans la lumière de guidage agencée dans l'autre paroi, et l'arbre comporte une extrémité axiale qui est saillante par rapport au boîtier de l'actionneur et qui est reliée à un organe dont les déplacements sont commandés par l'actionneur.

La présente invention concerne également un antivol pour une colonne de direction de véhicule automobile, caractérisé en ce qu'il est commandé par l'arbre de sortie d'un actionneur conforme à l'une quelconque des caractéristiques précédentes.
- la colonne de direction comporte une couronne qui est solidaire d'un arbre de la colonne en rotation autour de leur axe commun, l'antivol comporte un pignon, d'axe parallèle à l'axe de la colonne et de la couronne, qui est monté à rotation sur un support coulissant, le support coulissant est susceptible d'être déplacé en translation par l'arbre de sortie de l'actionneur entre une position dégagée du pignon et une position engagée du pignon dans laquelle ce dernier engrène avec la couronne de la colonne, il est prévu des moyens d'immobilisation du pignon en rotation autour de son axe par rapport au support pour bloquer l'arbre de la colonne en rotation lorsque le pignon est en position engrenée, et les moyens d'immobilisation sont commandés par une came pivotante qui est montée à rotation sur le support et qui est solidaire de l'arbre de sortie de l'actionneur.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée de l'actionneur selon l'invention ;
- les figures 2, 3, 4 sont des schémas illustrant différentes phases de fonctionnement de l'actionneur de la figure 1 ; et
- la figure 5 est une vue schématique en perspective illustrant le principe d'un antivol de colonne de direction pour véhicule automobile destiné à être commandé par un actionneur selon l'invention.

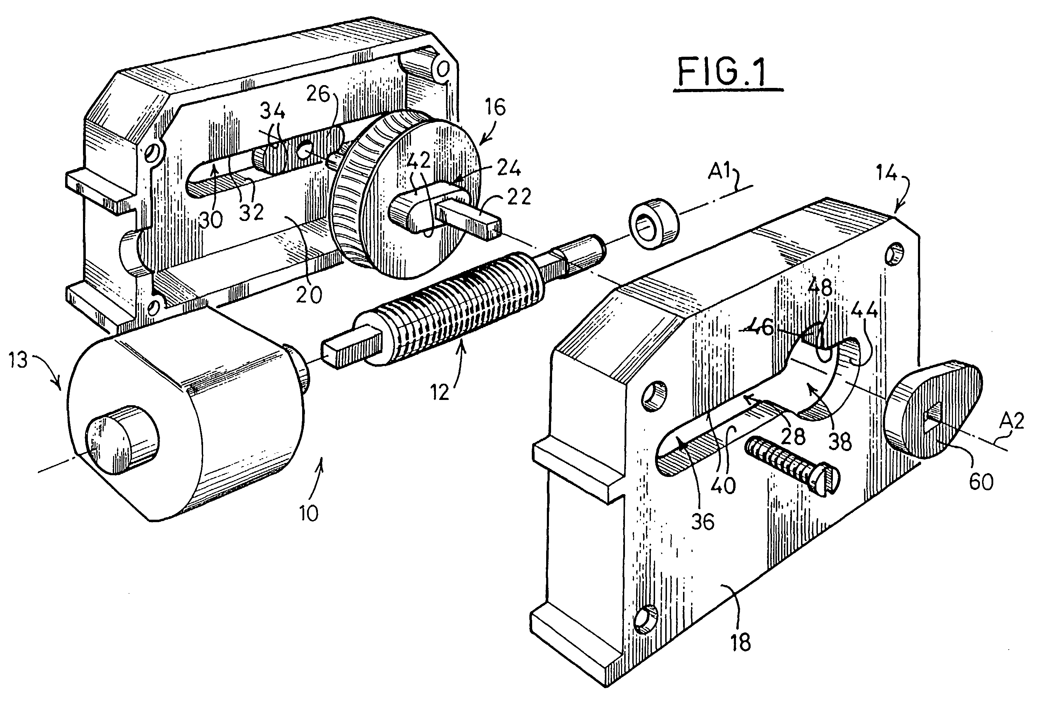

L'actionneur 10 qui est représenté sur la figure 1 comporte essentiellement une vis sans fin 12 qui est montée à rotation autour de son axe longitudinal A1 dans un boîtier 14 de l'actionneur 10 et qui engrène avec une roue 16 d'axe transversal A2 perpendiculaire à l'axe A1 de la vis 12.

Dans cet exemple de réalisation de l'invention, la vis sans fin 12 est entraînée par un moteur électrique 13 mais l'invention peut aussi être mise en oeuvre avec tout type de moyen d'entraînement de la vis 12. Celle-ci peut ainsi être entraînée par une simple manivelle ou par un câble flexible de transmission de mouvement en rotation.

La roue 16 est guidée selon la direction de son axe A2 entre deux parois latérales opposées 18, 20 du boîtier 14 et elle est solidaire d'un arbre de sortie 22 qui est agencé selon son axe A2 et qui est solidaire en rotation de la roue 16.

L'actionneur 10 comporte également un patin de commande 24 et un palier de guidage 26 qui sont montés chacun d'un côté de la roue 16 sur l'arbre de sortie 22. Le patin de commande 24 est solidaire en rotation de la roue 16 et il est reçu dans une lumière de commande 28 aménagée dans l'une des parois latérales 18 du boîtier 14. Au contraire, le palier de guidage 26 est monté libre à rotation sur l'arbre 22 et il est reçu dans une lumière de guidage 30 agencée dans l'autre 20 des parois latérales du boîtier.

Comme on peut le voir sur la figure 1, la lumière de guidage 30 est une lumière rectiligne qui s'étend parallèlement à la direction longitudinale de la vis 12. Elle comporte deux bords longitudinaux opposés 32 entre lesquels le palier de guidage 26 est reçu. Le palier 26 comporte deux faces rectilignes longitudinales 34 qui coopèrent avec les bords longitudinaux 32 de la lumière 30 pour empêcher le palier de guidage 26 de tourner dans la lumière correspondante 30. Le palier 26 est ainsi susceptible de coulisser longitudinalement dans la lumière 30.

Conformément à un aspect de l'invention, la lumière de commande 28, dans laquelle est reçu le patin de commande 24, comporte deux tronçons rectiligne 36 et circulaire 38 qui se succèdent longitudinalement d'arrière en avant selon la direction de l'axe A1 de la vis sans fin 12.

Le premier tronçon 36 de la lumière de commande 28 est un tronçon rectiligne qui s'étend parallèlement à la lumière de guidage 30 et qui comporte lui aussi deux bords longitudinaux opposés 40 avec lesquels coopèrent deux faces longitudinales rectilignes et parallèles 42 du patin de commande 24. Dans ce premier tronçon, le patin 24 est susceptible de coulisser longitudinalement, dans les deux sens, sans pouvoir tourner autour de l'axe A2 de l'arbre de sortie 22.

Le second tronçon 38 de la lumière de commande 28 comporte essentiellement un bord latéral en arc de cercle 44 qui s'étend sur plus des trois quart d'un cercle et dans lequel débouche le premier tronçon 36 de la lumière de commande 28.

Le diamètre du second tronçon circulaire 38 de la lumière 28 est sensiblement égal à la plus grande dimension du patin 24 selon une direction perpendiculaire à l'axe A2 de la roue 16 afin que ce dernier puisse pivoter autour de l'axe A2 à l'intérieur du second tronçon 38.

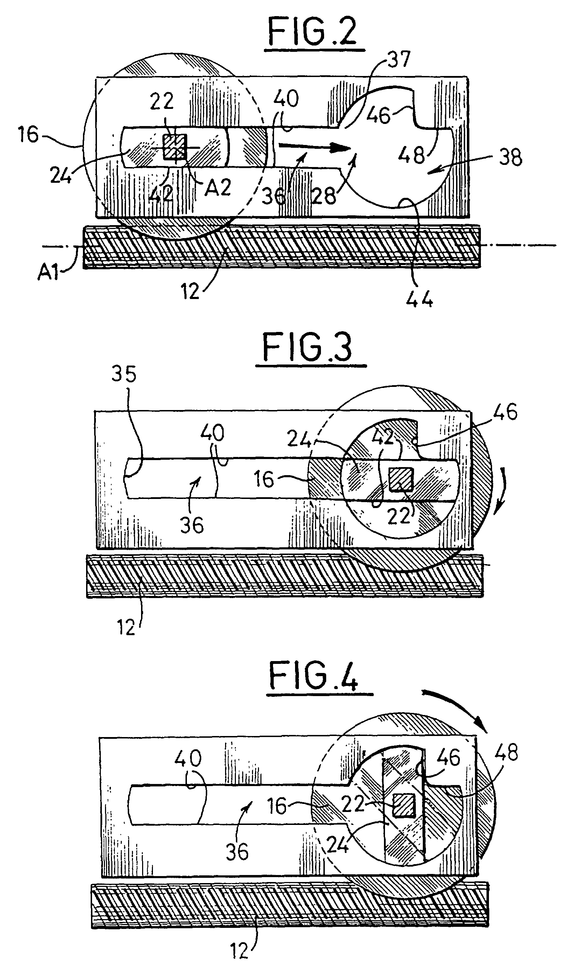

Le fonctionnement de l'actionneur 10 selon l'invention sera maintenant décrit plus en détails en référence aux figures 2 à 4.

Dans une position initiale représentée à la figure 2, la roue 16 est agencée sur la vis 12 de telle sorte que le patin de commande 24 est reçu dans le premier tronçon 36 de la lumière de commande 28, et plus particulièrement dans l'extrémité longitudinale arrière 35 du premier tronçon 36 qui est opposée à son extrémité avant 37 par laquelle il débouche dans le second tronçon 38. Le patin de commande 24 est alors immobilisé en rotation autour de l'axe A2 par ses faces longitudinales 42 qui coopèrent avec les bords longitudinaux 40 du premier tronçon 36.

De la sorte, lorsque le moteur électrique 13 entraîne la vis sans fin 12 en rotation autour de son axe A1, la roue 16, qui engrène avec la vis 12, ne peut tourner autour de son axe et elle est donc commandée en translation selon la direction longitudinale de la vis 12. La roue 16 est alors guidée de chaque côté d'une part par le patin de commande 24 et d'autre part par le palier de guidage 26, qui coulissent respectivement dans leur lumière correspondante de commande 28 et de guidage 30.

Ainsi, quand le patin de commande 24 est reçu au moins en partie dans le premier tronçon 36, la roue se déplace longitudinalement d'arrière en avant, c'est-à-dire de la gauche vers la droite en considérant les figures, emmenant avec elle l'arbre de sortie 22.

Selon un aspect de l'invention, lorsque le patin de commande 24 quitte le premier tronçon 36, il est entièrement reçu à l'intérieur du second tronçon 38 et il est en appui par une extrémité longitudinale avant contre le bord circulaire 44 de ce dernier de manière à empêcher toute translation supplémentaire vers l'avant du patin 24, et donc de la roue 16 et de l'arbre de sortie 22.

Si la vis sans fin 12 continue à être entraînée dans le même sens par le moteur 13, le patin de commande 24 ne s'oppose alors plus à la rotation de la roue 16 et celle-ci se met à pivoter autour de son axe A2 ainsi que cela est représenté sur la figure 4.

Selon un autre aspect de l'invention, la rotation du patin 24 dans le second tronçon 38 de la lumière de commande 28 est limitée par deux butées d'arrêt 46, 48 qui sont agencées de manière à limiter à un quart de tour la course angulaire du patin, et donc de l'arbre de sortie 22, dans le second tronçon 28.

En effet, lorsque la vis sans fin 12 tourne dans le sens dans lequel elle commande le déplacement d'arrière en avant du premier vers le second tronçon, le patin 24 tend à tourner dans le second tronçon 28, dans le sens des aiguilles d'une montre en considérant la figure 4, jusqu'à ce que l'une de ses faces longitudinales 42 arrive en appui contre une première 46 des butées d'arrêt qui délimitent le bord 44 en arc de cercle du second tronçon 28.

Cette face de butée 46 est agencée de manière que le palier 41 effectue un quart de tour entre ses positions représentées respectivement aux figures 3 et 4.

Le patin 24 n'est plus alors susceptible de pivoter autour de l'axe 32 ni de se translater à l'intérieur du second tronçon 28 de sorte que la roue 16 se trouve totalement immobilisée. Il est alors nécessaire d'arrêter le moteur électrique 13 soit en ayant détecté l'arrivée du patin 24 dans cette position, soit en détectant une variation brutale du couple fourni par le moteur électrique 13.

On peut ensuite ramener l'arbre de sortie 22 vers sa position initiale représentée à la figure 2 en inversant le sens de rotation de la vis sans fin 12.

En partant de la position représentée à la figure 4, le patin 24 pivote alors dans le sens contraire des aiguilles d'une montre en considérant cette figure, jusqu'à sa position représentée à la figure 3 dans laquelle l'une de ses faces longitudinales 42 arrive en appui contre la deuxième 48 des butées d'arrêt du second tronçon 38.

Dans cette position, le patin 24 est orienté de manière que ses faces longitudinales 42 sont orientées parallèlement aux bords longitudinaux 40 du premier tronçon 36 de la lumière de commande 28, en regard de l'extrémité longitudinale avant 37 du premier tronçon 36 qui débouche dans le second tronçon 38. Par l'action de la seconde butée d'arrêt 48, le patin 24 est empêché de pivoter autour de son axe A2 si bien que le mouvement de rotation de la vis 12 est transformé en un mouvement de translation, d'arrière en avant, de la roue 16. Le patin 24 tend alors à s'engager de nouveau dans le premier tronçon 38 de la lumière de commande 28 et continue ainsi jusqu'à l'arrivée dans sa position initiale représentée à la figure 2.

L'actionneur selon l'invention permet donc d'utiliser le seul mouvement de rotation de la vis sans fin, sans changement de sens, pour provoquer deux mouvements consécutifs de l'arbre de sortie 22. En inversant le mouvement de rotation de la vis, on inverse les deux mouvements consécutifs de l'arbre de sortie 22 pour le ramener à sa position initiale.

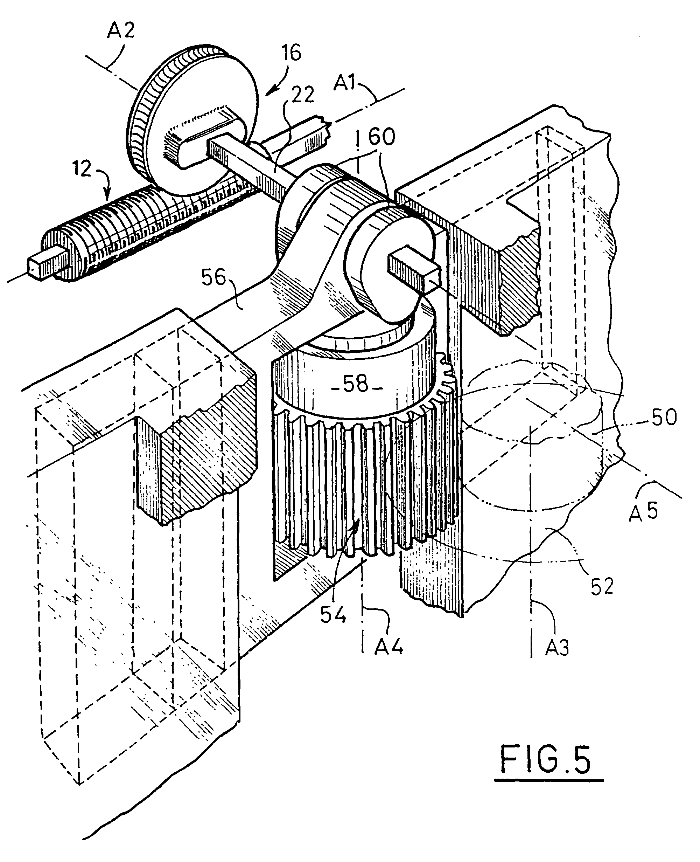

On a représenté de manière schématique sur la figure 5 un exemple d'application dans lequel l'actionneur 10 selon l'invention est particulièrement utile.

On a représenté sur la figure 5 un antivol pour une colonne de direction 50 de véhicule automobile. La colonne 50 comporte un arbre de colonne sur lequel est montée une roue dentée 52 qui lui est coaxiale et qui en est solidaire en rotation. L'antivol comporte essentiellement un pignon 54, d'axe A4 parallèle à l'axe A3 de la colonne 50, qui est monté à rotation autour de son axe A4 sur un support coulissant 56. Le support coulissant 56 se déplace parallèlement à une direction tangente de la couronne dentée 52 entre une position dégagée (non représentée) et une position engagée représentée à la figure 5, dans laquelle le pignon 54 engrène avec la couronne 52.

Lorsque le pignon 54 est en position dégagée, il est libre en rotation autour de son axe A4 et l'antivol est alors dans son état déverrouillé.

Pour mettre en oeuvre l'antivol, on commande le déplacement en translation du coulisseau 56 vers la position d'engagement du pignon 54. Lorsque les dents du pignon 54 arrivent au contact de celles de la couronne 52, le pignon 54 peut tourner sur lui-même pour permettre la poursuite du mouvement de translation du coulisseau 56.

Lorsque le coulisseau 56 a atteint la position dans laquelle l'entraxe entre les axes A3, A4, respectivement de la colonne 50 et du pignon 54, est minimal, un dispositif 58 d'immobilisation en rotation du pignon 54 autour de son axe A4 est mis en oeuvre. Le dispositif d'immobilisation 58, qui peut être par exemple un limiteur de couple à embrayage multidisques agencé selon l'axe A4 du pignon 54 est commandé par l'intermédiaire de deux cames 60 qui sont montées à rotation par rapport au coulisseau 56 autour d'un axe A5 perpendiculaire et concourant avec les axes A3 et A4 de la colonne 10 et du pignon 54.

Pour la mise en oeuvre du limiteur de couple, il suffit de faire pivoter les cames 60 un quart de tour autour de leur axe de rotation A5.

Dans cet exemple, l'entraîneur 10 selon l'invention permet de commander à l'aide d'un seul moteur l'ensemble des déplacements nécessaires à la mise à l'état de condamnation de l'antivol.

En effet, en disposant l'actionneur 10 décrit précédemment de telle sorte que l'axe A2 de la roue 16 coïncide avec l'axe de rotation A5 des cames 60, l'arbre de sortie 22 peut à la fois commander la translation du support coulissant 56 et la rotation des cames 60, à l'aide du seul moteur électrique 13. Eventuellement, on peut relier le palier de guidage 26 de l'actionneur 10 au coulisseau 56 pour faire en sorte que les efforts induits sur l'arbre de sortie 22 et sur la roue 16 lors de la translation soient symétriques par rapport à la vis d'entraînement 12.

Avantageusement, on réalise à coup sûr et à faible coût la nécessaire séquence des deux mouvements de translation et de rotation qui évite que l'on ne bloque le pignon 54 en rotation avant qu'il n'ait atteint sa position correcte d'engrènement et, inversement, qui évite que l'on tente de dégager le pignon 54 avant de l'avoir libéré en rotation.

## Revendications

1. Actionneur à roue et vis sans fin, du type dans lequel mouvement d'entrée est transformé en deux mouvements successifs de translation et de rotation d'un arbre de sortie (22) et comportant une lumière de commande (28) prévue dans un corps fixe (14) de l'actionneur (10), caractérisé en ce que la roue (16) comporte un patin de commande (24) qui est fixe par rapport à a roue (16) et qui se déplace dans ladite lumière de commande (28), en ce que la lumière (28) comporte un premier tronçon rectiligne (36), dans lequel le patin de commande (24) de la roue (16) coulisse en autorisant une translation de la roue (16) selon une direction parallèle à l'axe (A1) de la vis (12) et dans lequel le patin (24) bloque toute rotation de la roue (16) autour de son axe (A2), et qui se prolonge par un second tronçon (38) dans lequel le patin (24) pivote pour autoriser la rotation de la roue (16) autour de son axe (A2) tout en l'immobilisant en translation, et en ce que l'arbre de sortie (22) est agencé selon l'axe (A2) de la roue (16) et est solidaire en rotation de la roue (16).

2. Actionneur selon la revendication 1, caractérisé en ce que le second tronçon (38) de la lumière de commande (28) comporte un bord (44) en arc de cercle d'axe parallèle à celui de la roue (16) et dont le diamètre est sensiblement égal à la plus grande dimension du patin de commande (24) dans un plan perpendiculaire à l'axe (A2) de la roue (16).

3. Actionneur selon la revendication 2, caractérisé en ce que le second tronçon (38) de la lumière de commande (28) comporte une butée d'arrêt (46) en rotation du patin (24) qui limite la course angulaire du patin (24) et de la roue (16) quand celle-ci est sollicitée par la vis (12) dans le sens dans lequel le patin (24) parcourt la lumière de commande (28) du premier (36) vers le second tronçon (38), de manière à former un butée de fin de course angulaire de l'arbre de sortie (22).

4. Actionneur selon la revendication 3, caractérisé en ce que le second tronçon (38) de la lumière de commande comporte une butée d'arrêt (48) en rotation du patin (24) qui limite la course angulaire du patin (24) et de la roue (12) lorsque celle-ci est sollicitée par la vis (12) dans le sens dans lequel le patin (24) parcourt la lumière de commande (28) du second tronçon (38) vers le premier (36), de manière à déterminer une position angulaire du patin (24), à l'intérieur du second tronçon (38), à partir de laquelle il est ensuite susceptible de pénétrer dans le premier tronçon (36).

5. Actionneur selon la revendication 4, caractérisé en ce que la course angulaire de l'arbre de sortie (22) qui est délimitée par les butées d'arrêt (46, 48) est sensiblement égale à un quart de tour.

6. Actionneur selon l'une quelconque des revendications précédentes, caractérisé en ce que la vis sans fin (12) est entraînée en rotation autour de son axe (A2) par un moteur électrique (13).

7. Actionneur selon l'une quelconque des revendications précédentes 1 à 5, caractérisé en ce que la vis sans fin est entraînée en rotation par l'intermédiaire d'un câble.

8. Actionneur selon l'une quelconque des revendications précédentes, caractérisé en ce que la roue (16) est montée à rotation dans un palier de guidage (26) qui coulisse dans une lumière de guidage (30) du corps fixe (14) de l'actionneur (10), et en ce que la lumière de guidage (30) s'étend selon une direction parallèle à celle du premier tronçon (36) de la lumière de commande (28).

9. Actionneur selon la revendication 8, caractérisé en ce que la roue (16) et la vis sans fin (12) sont agencées à l'intérieur d'un boîtier (14) qui comporte deux parois latérales (18, 20) parallèles à la direction de l'axe (A1) de la vis (12), en ce que l'arbre de sortie (22), qui est solidaire de la roue (16) en rotation autour de leur axe commun (A2), porte, d'un côté de la roue (16), le patin de commande (24) qui est solidaire en rotation de l'arbre (22) et qui est reçu dans la lumière de commande (28) formée dans une (18) des parois latérales, et, de l'autre côté de la roue (16), le palier de guidage (26) qui est libre en rotation sur l'arbre de sortie (22) et qui est reçu dans la lumière de guidage (30) agencée dans l'autre paroi, et en ce que l'arbre (22) comporte une extrémité axiale qui est saillante par rapport au boîtier (14) de l'actionneur (10) et qui est reliée à un organe (56, 60) dont les déplacements sont commandés par l'actionneur (10).

10. Antivol pour une colonne de direction (50) de véhicule automobile, caractérisé en ce qu'il est commandé par l'arbre de sortie (22) d'un actionneur (10) conforme à l'une quelconque des revendications précédentes.

11. Antivol selon la revendication 10, caractérisé en ce que la colonne de direction (10) comporte une couronne (52) qui est solidaire d'un arbre de la colonne (10) en rotation autour de leur axe commun (A3), en ce que l'antivol comporte un pignon (54), d'axe (A4) parallèle à l'axe (A3) de la colonne (50) et de la couronne (10), qui est monté à rotation sur un support coulissant (56), en ce que le support coulissant (56) est susceptible d'être déplacé en translation par l'arbre de sortie (22) de l'actionneur (10) entre une position dégagée du pignon (54) et une position engagée du pignon (54) dans laquelle ce dernier engrène avec la couronne (52) de la colonne (50), en ce qu'il est prévu des moyens (58) d'immobilisation du pignon (54) en rotation autour de son axe (A4) par rapport au support (56) pour bloquer l'arbre de la colonne (10) en rotation lorsque le pignon (18) est en position engrenée, et en ce que les moyens d'immobilisation (58) sont commandés par une came pivotante (60) qui est montée à rotation sur le support (56) et qui est solidaire de l'arbre de sortie (22) de l'actionneur (10).

## Claims

1. Worm and wheel actuator of the type in which an input movement is converted into two successive movements of translation and of rotation of an output shaft (22) and comprising a control slot (28) provided in a stationary body (14) of the actuator (10) characterized in that the wheel (16) comprises a control runner (24) which is stationary with respect to the wheel (16) and which moves along the said control slot (28), in that the slot (28) has a straight first portion (36) in which the control runner (24) of the wheel (16) slides, allowing the wheel (16) a translational movement in a direction parallel to the axis (A1) of the worm (12) and in which the runner (24) prevents any rotation of the wheel (16) about its axis (A2), and which is extended by a second portion (38) in which the runner (24) pivots to allow the wheel (16) to rotate about its axis (A2) while at the same time immobilizing it in terms of translation, and in that the output shaft (22) is arranged along the axis (A2) of the wheel (16) and rotates as one with the wheel (16).

2. Actuator according to Claim 1, characterized in that the second portion (38) of the control slot (28) has an edge (44) in the shape of an arc of a circle of axis parallel to that of the wheel (16) and the diameter of which is approximately equal to the largest dimension of the control runner (24) in a plane perpendicular to the axis (A2) of the wheel (16).

3. Actuator according to Claim 2, characterized in that the second portion (38) of the control slot (28) has a rotational end stop (46) for the runner (24) which stop limits the angular travel of the runner (24) and of the wheel (16) when the latter is acted upon by the screw (12) in the direction in which the runner (24) travels along the control slot (28) from the first (36) to the second (38) portion, so as to form an end-of-angular-travel stop for the output shaft (22).

4. Actuator according to Claim 3, characterized in that the second portion (38) of the control slot comprises an end stop (48) for the rotation of the runner (24) which limits the angular travel of the runner (24) and of the wheel (12) when the latter is acted upon by the screw (12) in the direction in which the runner (24) runs along the control slot (28) from the second portion (38) to the first (36), so as to determine an angular position of the runner (24), within the second portion (38), from which position it can then enter the first portion (36).

5. Actuator according to Claim 4, characterized in that the angular travel of the output shaft (22), which travel is delimited by the end stops (46, 48) is approximately equal to one quarter of a turn.

6. Actuator according to any one of the preceding claims, characterized in that the worm (12) is rotated about its axis (A2) by an electric motor (13).

7. Actuator according to any one of the preceding claims 1 to 5, characterized in that the worm is rotated via a cable.

8. Actuator according to any one of the preceding claims, characterized in that the wheel (16) is mounted to rotate in a guide bearing (26) which slides along a guide slot (30) of the stationary body (14) of the actuator (10) and in that the guide slot (30) extends in a direction parallel to that of the first portion (36) of the control slot (28).

9. Actuator according to Claim 8, characterized in that the wheel (16) and the worm (12) are arranged inside a casing (14) which has two side walls (18, 20) parallel to the direction of the axis (A1) of the worm (12), in that the output shaft (22), which rotates as one with the wheel (16) about their common axis (A2) carries, on one side of the wheel (16), the control runner (24) which rotates as one with the shaft (22) and which is housed in the control slot (28) formed in one (18) of the side walls and, on the other side of the wheel (16), the guide bearing (26) which is free to rotate on the output shaft (22) and is housed in the guide slot (30) arranged in the other wall, and in that the shaft (22) has an axial end which projects from the casing (14) of the actuator (10) and is connected to a member (56, 60), the movements of which are controlled by the actuator (10).

10. Anti-theft device for a motor vehicle steering column (50), characterized in that it is controlled by the output shaft (22) of an actuator (10) according to any one of the preceding claims.

11. Anti-theft device according to Claim 10, characterized in that the steering column (50) comprises an annulus gear (52) which rotates as one with one shaft of the column (50) about their common axis (A3), in that the anti-theft device comprises a pinion (54), of axis (A4) parallel to the axis (A3) of the column (50) and of the annulus gear (52), which pinion is mounted to rotate on a sliding support (56), in that the sliding support (56) can be moved in terms of translation by the output shaft (22) of the actuator (10) between a position in which the pinion (54) is disengaged and a position in which the pinion (54) is engaged, in which latter position the pinion meshes with the annulus gear (52) of the column (50), in that means (58) are provided for immobilizing the pinion (54) in terms of rotation about its axis (A4) with respect to the support (56) so as to prevent the steering column (10) from rotating when the pinion (18) is in the engaged position, and in that the immobilizing means (58) are controlled by a pivoting cam (60) which is mounted to rotate on the support (56) and which is secured to the output shaft (22) of the actuator (10).

## Patentansprüche

1. Antrieb mit Rad und Schnecke jener Art, bei der eine Eingangsbewegung in zwei aufeinanderfolgende Bewegungen, nämlich eine Translations- und eine Drehbewegung, einer Ausgangswelle (22) umgewandelt wird, und der einen Steuerschlitz (28) enthält, der in einem festgelegten Körper (14) des Antriebs (10) ausgebildet ist, dadurch gekennzeichnet, daß das Rad (16) einen Steuernocken (24) aufweist, der bezüglich des Rads (16) festgelegt ist und sich in dem Steuerschlitz (28) bewegt, daß der Schlitz (28) einen ersten geradlinigen Abschnitt (36) aufweist, in dem der Steuernocken (24) des Rads (16) gleitet und dabei eine Translationsbewegung des Rads (16) in einer parallel zur Achse (A1) der Schnecke (12) verlaufenden Richtung gestattet und in dem der Nocken (24) jegliche Drehung des Rads (16) um seine Achse (A2) blockiert, und der in seiner Verlängerung einen zweiten Abschnitt (38) aufweist, in dem der Nocken (24) schwenkt und so die Drehung des Rads (16) um seine Achse (A2) unter Sperrung der Translationsbewegung gestattet, und daß die Ausgangswelle (22) entlang der Achse (A2) des Rads (16) angeordnet und drehfest mit dem Rad (16) verbunden ist.

2. Antrieb nach Anspruch 1, dadurch gekennzeichnet, daß der zweite Abschnitt (38) des Steuerschlitzes (28) einen kreisbogenförmigen Rand (44) mit einer parallel zur Achse des Rads (16) verlaufenden Achse enthält, dessen Durchmesser in einer senkrecht zur Achse (A2) des Rads (16) verlaufenden Ebene im wesentlichen gleich der größten Abmessung des Steuernockens (24) ist.

3. Antrieb nach Anspruch 2, dadurch gekennzeichnet, daß der zweite Abschnitt (38) des Steuerschlitzes (28) einen Anschlag (46) zum Anhalten der Drehung des Nockens (24) aufweist, der den Winkelhub des Nockens (24) und des Rads (16) begrenzt, wenn dieses durch die Schnecke (12) in der Richtung vorbelastet wird, in der der Nocken (24) den Steuerschlitz (28) vom ersten (36) zum zweiten Abschnitt (38) durchläuft, so daß ein Winkelhubendanschlag der Ausgangswelle (22) gebildet wird.

4. Antrieb nach Anspruch 3, dadurch gekennzeichnet, daß der zweite Abschnitt (38) des Steuerschlitzes einen Anschlag (48) zum Anhalten der Drehung des Nockens (24) aufweist, der den Winkelhub des Nockens (24) und des Rads (12) begrenzt, wenn dieses durch die Schnecke (12) in der Richtung vorbelastet wird, in der der Nocken (24) den Steuerschlitz (28) vom zweiten (38) zum ersten Abschnitt (36) durchläuft, so daß im Innern des zweiten Abschnitts (38) eine Winkelstellung des Nockens (24) bestimmt wird, von der aus er anschließend in den ersten Abschnitt (36) eintreten kann.

5. Antrieb nach Anspruch 4, dadurch gekennzeichnet, daß der Winkelhub der Ausgangswelle (22), der durch die Anschläge (46, 48) begrenzt wird, im wesentlichen einer Viertel-Umdrehung entspricht.

6. Antrieb nach einem der vorhergehenden Ansprüche, dadurch gekennzeichnet, daß die Schnecke (12) durch einen Elektromotor (13) um ihre Achse (A2) drehangetrieben wird.

7. Antrieb nach einem der Ansprüche 1 bis 5, dadurch gekennzeichnet, daß die Schnecke durch ein Seil drehangetrieben wird.

8. Antrieb nach einem der vorhergehenden Ansprüche, dadurch gekennzeichnet, daß das Rad (16) drehbar in einem Führungslager (26) angebracht ist, das in einem Führungsschlitz (30) des festgelegten Körpers (14) des Antriebs (10) gleitet, und daß sich der Führungsschlitz (30) in einer parallel zur Richtung des ersten Abschnitts (36) des Steuerschlitzes (28) verlaufenden Richtung erstreckt.

9. Antrieb nach Anspruch 8, dadurch gekennzeichnet, daß das Rad (16) und die Schnecke (12) im Innern eines Gehäuses (14) angeordnet sind, das zwei parallel zur Richtung der Achse (A1) der Schnecke (12) verlaufende Seitenwände (18, 20) aufweist, und daß die Ausgangswelle (22), die mit dem Rad (16) drehfest um ihre gemeinsame Achse (A2) verbunden ist, auf einer Seite des Rads (16) den Steuernocken (24) trägt, der mit der Welle (22) drehfest verbunden ist und in dem in einer (18) der Seitenwände ausgebildeten Steuerschlitz (28) aufgenommen wird, und auf der anderen Seite des Rads (16) das Führungslager (26) trägt, das auf der Ausgangswelle (22) frei drehbar ist und in dem in der anderen Wand ausgebildeten Führungsschlitz (30) aufgenommen wird, und daß die Welle (22) ein axiales Ende enthält, das bezüglich des Gehäuses (14) des Antriebs (10) vorragt und das mit einem Glied (56, 60) verbunden ist, dessen Bewegungen durch den Antrieb (10) gesteuert werden.

10. Diebstahlsicherung für eine Lenksäule (50) eines Kraftfahrzeugs, dadurch gekennzeichnet, daß sie durch die Ausgangswelle (22) eines Antriebs (10) nach einem der vorhergehenden Ansprüche betätigt wird.

11. Diebstahlsicherung nach Anspruch 10, dadurch gekennzeichnet, daß die Lenksäule (50) einen drehfest mit einer Welle der Säule (50) um ihre gemeinsame Achse (A3) verbundenen Kranz (52) aufweist, daß die Diebstahlsicherung ein Ritzel (54) mit einer parallel zur Achse (A3) der Säule (50) und des Kranzes (52) verlaufenden Achse (A4) aufweist, das drehbar an einem Gleitträger (56) montiert ist, daß der Gleitträger (56) durch die Ausgangswelle (22) des Antriebs (10) zwischen einer ausgerückten Stellung des Ritzels (54) und einer eingerückten Stellung des Ritzels (54), in der letzteres mit dem Kranz (52) der Säule (50) in Eingriff steht, translatorisch bewegt werden kann, daß Mittel (58) zur Sperrung einer Drehung des Ritzels (54) um seine Achse (A4) bezüglich des Trägers (56) vorgesehen sind, um eine Drehung der Welle der Säule (52) zu blockieren, wenn sich das Ritzel (18) in Eingriffsstellung befindet, und daß die Sperrmittel (58) durch eine Schwenkkurve (60) gesteuert werden, die drehbar am Träger (56) angebracht und mit der Ausgangswelle (22) des Antriebs (10) drehfest verbunden ist.
